# EUROPEAN PATENT SPECIFICATION

(11) **EP 0 323 536 B1**
(45) Date of publication and mention of the grant of the patent: **29.12.1993**
(21) Application number: 88100097.0
(22) Date of filing: 07.01.1988
(51) Int. Cl.: C08G 61/00

(54) **Arylcyclobutene/dienophile copolymers**
Arylcyclobuten/Dienophil-Copolymere
Copolymères d'arylcyclobutènes et de diénophyles

(43) Date of publication of application: 12.07.1989
(73) Proprietor: THE DOW CHEMICAL COMPANY, Midland Michigan 48640-1967 (US)
(72) Inventor: Hahn, Stephen F., Midland Michigan 48640 (US); Kirchhoff, Robert A., Midland Michigan 48640 (US)
(74) Representative: Sternagel, Hans-Günther, Dr.

(56) References cited:
- EP-A- 0 193 721
- WO-A-86/01503
- WO-A-86/01809
- US-A- 4 711 964

## Description

This invention relates to arylcyclobutane copolymer compositions.

Arylcyclobutane resins are a family of monomers, oligomers, prepolymers and polymers. Poly(arylcyclobutane) polymers are disclosed in U S -A-4,540,763. The polymers are prepared by heating a resin having two or more arylcyclobutane moieties to temperatures sufficient to open the cyclobutane rings. The opened cyclobutane rings react with each other to form a crosslinked polymer.

The poly(arylcyclobutane) polymers exhibit excellent thermal and oxidative stability. They can be used as coatings, adhesives, composites and the like. However, U S-A-4,540,763 discloses that the polymers can only be prepared from arylcyclobutane-containing monomers.

In view of the excellent properties exhibited by arylcyclobutane polymers, it would be desirable to have compounds and methods for preparing copolymers of arylcyclobutane monomers and other monomers.

According to US-A-4,711,964 resins are prepared by polymerization of compounds of the formula 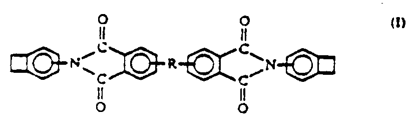
where R is a divalent linking group. Additionally blends of a compound of the formula (I) as defined above and a bis-maleimide of the formula 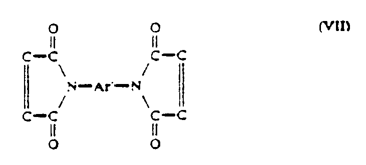
where Ar' is an aromatic linking group are described.

In WO-A-86/01503 poly(arylcyclobutenes)monomers which are useful in the preparation of polymeric compositions used in films and in composites are disclosed. The poly(arylcyclobutene) is characterized by comprising aryl moieties with one or more cyclobutene rings fused to each aryl moiety, wherein the aryl moieties are directly bonded to one another or are connected by a bridging member, wherein the bridging member is (1) a polyvalent inorganic radical or (2) a polyvalent organic radical which (a) contains one or more heteroatoms comprising oxygen, sulfur, nitrogen, or phosphorus or (b) one or more aromatic radicals. The poly(arylcyclobutenes) are sometimes named poly(arylcyclobutanes) in the relevant literature.

WO-A-86/01809 describes a polymeric composition which comprises the reaction product prepared by exposing one or more poly(arylcyclobutenes) having two or more aryl moieties with one or more cyclobutene rings fused to each aryl moiety, wherein the aryl moieties are directly bonded to one another or are connected by a bridging member wherein the bridging member is (1) a polyvalent inorganic radical or (2) a polyvalent organic radical, to temperatures at which the poly(arylcyclobutenes) undergo polymerization.

This invention is a copolymer composition comprising, in a polymerised form, a compound containing at least two polymerizable arylcyclobutene moieties, and a monomer containing at least two copolymerizable dienophilic moieties, said composition being characterized in that the compound containing at least two polymerizable arylcyclobutene moieties is:
poly(styrene-co-4-vinylbenzocyclobutene) of the formula: 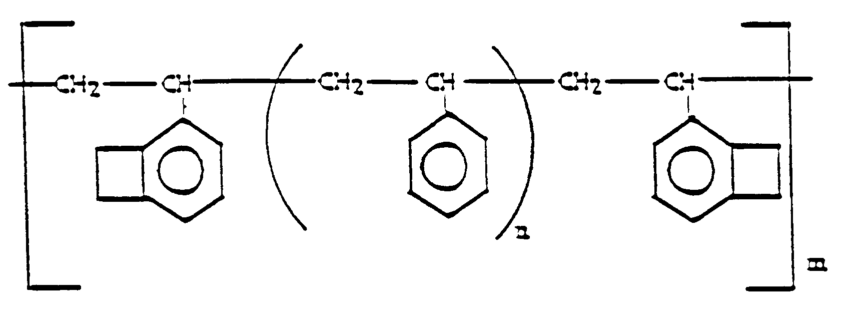
wherein n and m are integers of at least 1.

The mixture of the dienophilic monomer and said arylcyclobutane compound provides a reactive monomer system which is useful in preparing copolymer compositions. The copolymer compositions can exhibit improved properties such as adhesion, thermal stability, solvent resistance, dielectric constant, etc. compared to homopolymer compositions prepared from either monomer. The copolymer compositions of this invention can be thermoplastic or thermoset polymeric compositions and can be used in conventional thermoplastic and thermoset applications. Examples of such uses include adhesives, coatings, composites and the like.

The arylcyclobutane compound of this invention and its preparation are disclosed in U S-A-4,540,763. Methods of making the arylcyclobutane precursors are disclosed in U S-A-s 4,562,280 and 4,570,011.

The arylcyclobutane compound of this invention is a reaction product of styrene and 4-vinylbenzocyclobutane. To prepare such a monomer styrene is contacted with 4-vinylbenzocyclobutane in the presence of a suitable free-radical initiator, such as azobisisobutyronitrile. The styrene and 4-vinylbenzocyclobutane compounds are added in any amount sufficient to provide two polymerizable benzocyclobutane moieties. This compound can be called poly(styrene-co-4-vinylbenzocyclobutane), and corresponds to the formula 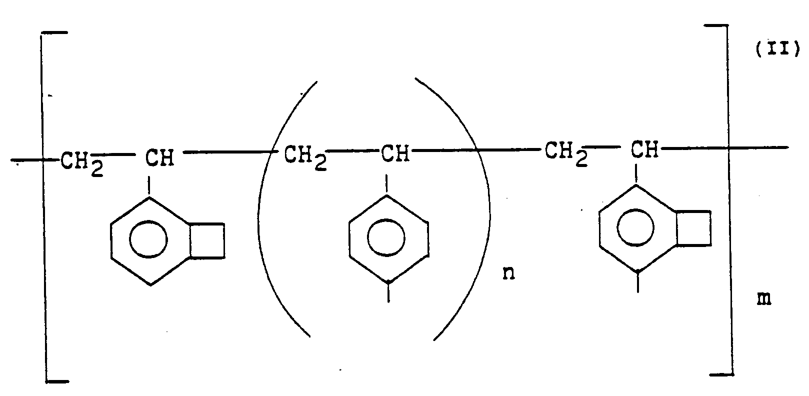
wherein n and m are integers of at least 1.

The dienophilic moieties are moieties which react with conjugated dienes to form a six-member ring. Such moieties are discussed in Morrison and Boyd, Organic Chemistry, 3rd Ed., 1979. Suitable moieties are alkenyl moieties and preferably are unsaturated hydrocarbon moieties having an electron-withdrawing group on an adjacent carbon. Suitable electron-withdrawing groups are oxygen, nitrogen, halogens, phosphorous and the like. Especially preferred dienophilic moieties are a,b-unsaturated carbonyl compounds, and the most preferred moieties are maleimide moieties.

The more preferred monomers are monomers which contain polymerizable dienophilic moieties which polymerize at about (i.e., within 50°C) of the temperature at which the arylcyclobutane-containing monomers polymerize. The most preferred monomers contain maleimide moieties. The maleimide-containing monomers polymerize at about 200°C. Such monomers can be represented by the formula: 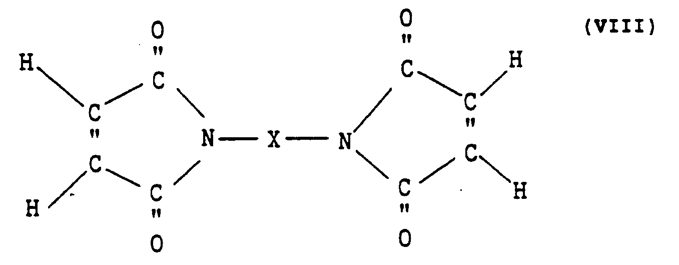
wherein X is a polyvalent organic or inorganic moiety.

Preferred X groups are: 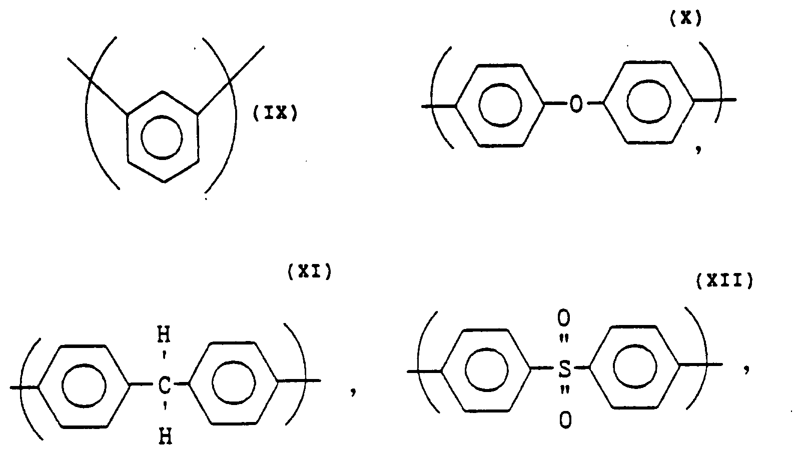
and 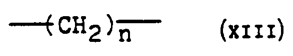
wherein n is at least 1.

Methods of preparing such maleimides are disclosed in Polymer, Vol. 26, p. 1561, September 1985.

Yet other preferred dienophilic moieties are alkylene moieties, especially acetylenic moieties.

The amounts of the arylcyclobutane-containing compound and the dienophilic monomer which are employed in preparing the copolymers of this invention can vary. The arylcyclobutane compound is employed at less than 100 percent by weight of the monomers mixture, and the dienophilic monomer is employed at less than 100 percent of the monomer mixture. Preferably, if the dienophilic monomer polymerizes at a temperature below the polymerization temperature of the arylcyclobutane compound, the ratio of the amount of dienophilic monomer to the amount of arylcyclobutane compound is greater than one.

In addition to the arylcyclobutane compound and dienophilic monomer, the copolymer composition of this invention can be comprised of other monomeric or polymeric compositions which can independently polymerize to provide an interpenetrating network or can copolymerize with the monomers. Suitable optional monomeric or polymeric compositions include mono-arylcyclobutane monomers (i.e., monomers which contain only one arylcyclobutane moiety) and other poly(arylcyclobutane) monomers (i.e., monomers which contain at least two arylcyclobutane moieties). Preferred mono-arylcyclobutanes are A,B-monomers which have a polymerizable benzocyclobutane moiety and a reactive maleimide moiety. Such monomers can correspond to the formula 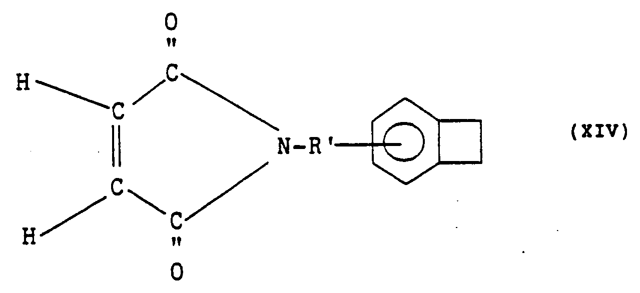
wherein R' is a direct bond, or a polyvalent organic or inorganic moiety, and can be the same or different as R. Such A,B-monomers can be prepared by dehydrating benzocyclobutenyl maleamic acid. The maleamic acid derivatives and methods for preparing them are disclosed in U S-A-4,638,078.

The copolymer composition can also contain optional components which are determined by the particular use of the copolymer. Such optional components include fibrous fillers such as glass, quartz and graphite fibers; organic and inorganic powder fillers; catalysts; curing agents; fire retardants; and the like. For example, the copolymer composition can contain an amount of an electro-conductive metal such as silver or gold powder and can be used as a die-attach material. In another example, the copolymer composition can contain an amount of reinforcing glass fibers and can be used as a composite.

The copolymer composition is prepared by combining the arylcyclobutane compound and the dienophilic monomer to form a mixture and treating the monomer mixture at sufficient polymerization conditions. The monomer mixture can thermally polymerize, so the application of heat is a preferred polymerization process.

When preparing the preferred copolymers from Poly(styrene-co-4-vinylbenzocyclobutane) and bismaleimide monomers, suitable polymerization temperatures are temperatures at which the cyclobutane rings open to provide a diene-type structure. Preferably such temperatures range from about 180°C to 270°C.

Preparing the copolymers of this invention can improve the physical properties of homopolymers prepared from the monomers. For example, adhesion/thermal stability, solvent resistance, dielectric constant, elongation at break (toughness), and the like can be improved. Also, surprisingly, the hot wet strength of the maleimide polymers can be increased.

The following example is an illustration and does not limit the scope of the invention.

### Example - Copolymers of Poly(styrene-co-4-vinylbenzocyclobutane) with the bismaleimide derived from 4,4'-diaminophenylether

A blend of the 2 components of this system was prepared initially. This blend was prepared in a 500 ml 2-neck round bottom flask equipped with a gas inlet tube and positive nitrogen pressure provided with a mineral oil bubbler, magnetic stirrer and stopper. To this was added 100 ml of dichloromethane and 25 g of poly(styrene-co-4-vinylbenzocyclobutane) (5 percent 4-vinylbenzocyclobutane, 1.25 g 4-vinylbenzocyclobutane, MW=130.29, 0.0096 equivalents). This mixture was stirred until complete dissolution occurred. To this mixture was added 3.45 g 4,4'-diphenyl ether bismaleimide (MW=360, 0.00958 moles) and 150 ml of dichloromethane. This mixture was stirred until complete dissolution occurred.

The yellow solution was poured into a cake pan which has been covered with a Teflon® sheet, and the dichloromethane was allowed to evaporate in a fume hood overnight. The resultant homogeneous, bright yellow polymer sheet was cut into small pieces with scissors and these pieces were then ground using a Wiley laboratory mill. The ground polymer was then dried in a vacuum oven overnight 13.15 Pa (0.1 mm Hg, 100°C). This dried powder weighed 19.7 g, or 69 percent recovery. Differential scanning calorimetry shows a glass transition at 86°C, and one major polymerization exotherm which peaks at 259.8°C.

A piece of heavy gauge alluminum foil was coated with a suitable mold release agent and placed on a flat steel plate with the coated surface facing up. On top of this was placed a steel plate in which was cut a hole in the shape of a standard tensile test bar. The assembly was then sprayed with a mold release agent. The benzocyclobutane/bismaleimide mixture was then placed in the mold shape, and the copolymer was pressed down into the mold with a spatula. More copolymer was placed on top of this, and the copolymer was then covered with another piece of release-agent-treated aluminum foil and another steel plate. The apparatus was then entered into a hydraulic press which has been heated to 210°C, and the platens were closed until they just touch both plates. The mold was then allowed to sit for 10 minutes while the copolymer melted; the mold was then pressurized to 15 tons ram force. The mold was then heated to 255°C over 10 minutes. The mold was maintained between 250°C to 255°C for another 10 minutes. At the end of this time, the pressure was released and the molding apparatus was transferred from the hot press directly to a cold press, where the mold was allowed to cool for 10 minutes. The copolymer part was then removed and was brown-orange in appearance, weighing 6.7 g.

The copolymer, containing 9.6 millimoles benzocyclobutane and 9.6 millimoles bismaleimide, exhibits a glass transition of 86°C prior to polymerization. The copolymer sample completely disintegrates in methylene chloride, whereas the copolymer obtained by thermally copolymerizing the bismaleimide and the polystyrene-co--4-vinylbenzocyclobutane swells but does not dissolve or disintegrate.

A mixture of 7.5 percent vinylbenzocyclobutanecontaining polystyrene-co-4-vinylbenzocyclobutane with 1 mole of bismaleimide per mole benzocyclobutane gave a copolymer which exhibits a glass transition prior to curing of 108°C to 111°C. The curing of this material by heating to 300°C gave a copolymer with a glass transition temperature from roughly 114°C to 121°C. Another sample of a mixture containing 5 percent benzocyclobutane and 3.85 millimoles bismaleimide was prepared and crosslinked by heating to 320°C. The uncured material exhibits a glass transition temperature of 89°C, while after curing, the glass transition temperature moves to 110°C. All of the samples of polystyrene-co-4-vinylbenzocyclobutane admixed with bismaleimide exhibit a polymerization exotherm beginning at 190°C to 200°C and peaking near 250°C to 260°C.

## Claims

1. A copolymer composition comprising, in a polymerized form, a compound containing at least two polymerizable arylcyclobutene moieties, and a monomer containing at least two copolymerizable dienophilic moieties, said composition being
**characterized in that**
the compound containing at least two polymerizable arylcyclobutene moieties is:
poly(styrene-co-4-vinylbenzocyclobutene) of the formula: 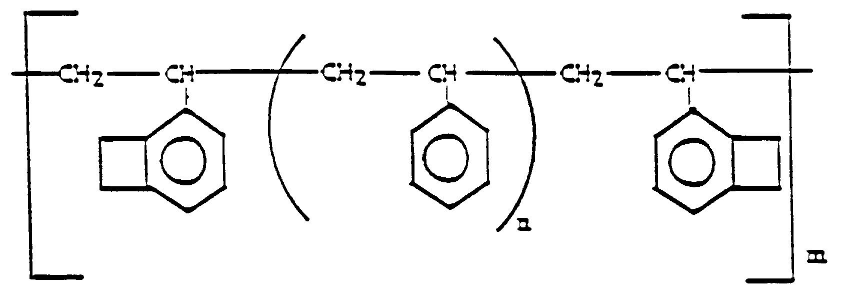 wherein n and m are integers of at least 1;

2. The copolymer composition of claim 1 wherein the dienophilic moieties are alkenyl moieties.

3. The copolymer composition of claim 1 wherein the dienophilic moieties are α,β-unsaturated carbonyl moieties.

4. The copolymer composition of claim 1 wherein the dienophilic moieties are maleimide moieties.

5. The copolymer composition of claim 1 wherein the monomer containing at least two polymerizable dienophilic moieties is 4,4'-diphenyl ether bismaleimide.

6. The copolymer composition of claim 1 which further comprises a monoarylcyclobutene monomer.

7. The copolymer composition of claim 6 wherein the monoarylcyclobutene monomer corresponds to the formula: 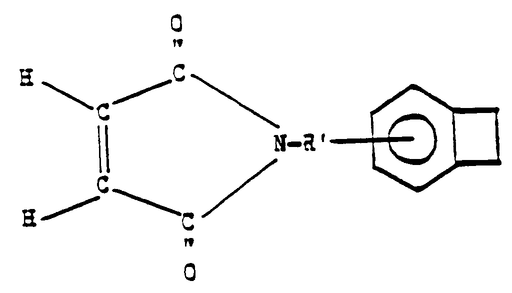 wherein R' is a direct bond, or a polyvalent organic or inorganic moiety.

## Patentansprüche

1. Copolymerzusammensetzung, enthaltend in polymerisierter Form eine Verbindung, die mindestens zwei polymerisierbare Arylcyclobutengruppen enthält, und ein mindestens zwei copolymerisierbare, dienophile Gruppen enthaltendes Monomer, wobei die Zusammensetzung
**dadurch gekennzeichnet ist**,
daß die mindestens zwei polymerisierbare Arylcyclobutengruppen enthaltende Verbindung Poly(styrol-co-4-vinylbenzocyclobuten) der Formel ist: 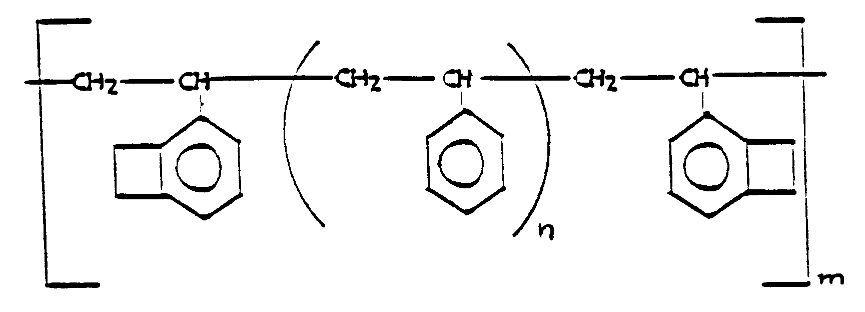 in der n und m ganze Zahlen von mindestens 1 sind.

2. Copolymerzusammensetzung nach Anspruch 1,
**dadurch gekennzeichnet**,
daß die dienophilen Gruppen Alkenylgruppen sind.

3. Copolymerzusammensetzung nach Anspruch 1,
**dadurch gekennzeichnet**,
daß die dienophilen Gruppen α,β-ungesättigte Carbonylgruppen sind.

4. Copolymerzusammensetzung nach Anspruch 1,
**dadurch gekennzeichnet**,
daß die dienophilen Gruppen Maleinimidgruppen sind.

5. Copolymerzusammensetzung nach Anspruch 1,
**dadurch gekennzeichnet**,
daß das mindestens zwei polymerisierbare, dienophile Gruppen enthaltende Monomer 4,4'-Diphenyletherbismaleinimid ist.

6. Copolymerzusammensetzung nach Anspruch 1,
**dadurch gekennzeichnet**,
daß sie weiterhin ein Monoarylcyclobutenmonomer enthält.

7. Copolymerzusammensetzung nach Anspruch 6,
**dadurch gekennzeichnet**,
daß das Monoarylcyclobutenmonomer der Formel entspricht: 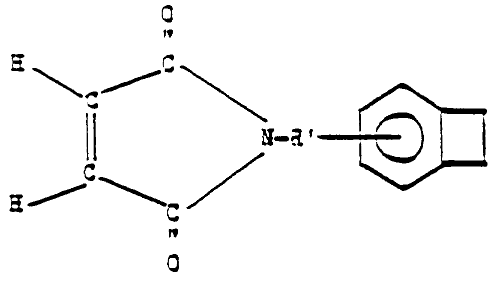 in der R' eine direkte Bindung oder eine mehrwertige organische oder anorganische Gruppe ist.

## Revendications

1. Composition de copolymère comprenant, sous une forme polymérisée, un composé contenant au moins deux fragments arylcyclobutène polymérisables, et un monomère contenant au moins deux fragments diénophiles copolymérisables, ladite composition étant caractérisée en ce que le composé contenant au moins deux fragments arylcyclobutène polymérisables est le poly(styrène-co-4-vinylbenzocyclobutène) de formule : 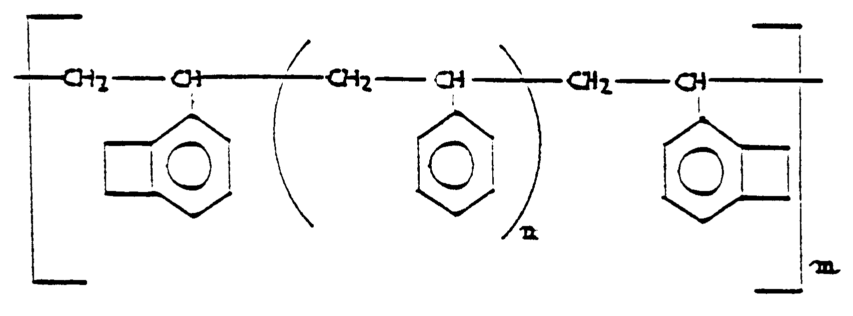 dans laquelle n et m sont des nombres entiers valant au moins 1.

2. Composition de copolymère selon la revendication 1, dans laquelle les fragments diénophiles sont des fragments alcényle.

3. Composition de copolymère selon la revendication 1, dans laquelle les fragments diénophiles sont des fragments carbonyle α,β-insaturés.

4. Composition de copolymère selon la revendication 1, dans laquelle les fragments diénophiles sont des fragments maléimide.

5. Composition de copolymère selon la revendication 1, dans laquelle le monomère contenant au moins deux fragments diénophiles polymérisables est le 4,4'-diphényléther-bismaléimide.

6. Composition de copolymère selon la revendication 1, comprenant en outre un monomère monoarylcyclobutène.

7. Composition de copolymère selon la revendication 6 , dans laquelle le monomère monoarylcyclobutène correspond à la formule : 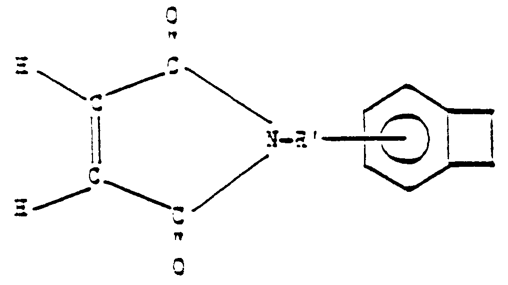 dans laquelle R' est une liaison directe, ou un fragment polyvalent organique ou inorganique.
